(19) Europäisches Patentamt
European Patent Office
Office européen des brevets

(11) EP 0 582 215 B1

(12) **FASCICULE DE BREVET EUROPEEN**

(45) Date de publication et mention
de la délivrance du brevet:
**15.01.1997 Bulletin 1997/03**

(51) Int. Cl.⁶: **B29D 30/70**, B29D 30/30,
B29D 30/38

(21) Numéro de dépôt: **93112139.6**

(22) Date de dépôt: **29.07.1993**

(54) **Procédé de fabrication d'un pneumatique et machine de fabrication d'un renfort de sommet pour pneumatique**

Verfahren zum Herstellen von Reifen und Vorrichtung zum Herstellen einer Reifengürtelverstärkung

Method for manufacturing tires and apparatus for manufacturing a crown reinforcement for tires

(84) Etats contractants désignés:
**AT BE CH DE ES FR GB IT LI LU NL SE**

(30) Priorité: **07.08.1992 FR 9209926**

(43) Date de publication de la demande:
**09.02.1994 Bulletin 1994/06**

(73) Titulaire: **SEDEPRO**
**F-75015 Paris (FR)**

(72) Inventeurs:
• **Debroche, Claude**
**F-63118 Cebazat (FR)**
• **Laurent, Daniel**
**F-38240 Meylan (FR)**

(74) Mandataire: **Bauvir, Jacques et al**
**Michelin & Cie,**
**Service SGD/LG/PI Ladoux**
**63040 Clermont-Ferrand Cedex 01 (FR)**

(56) Documents cités:
EP-A- 0 027 098          EP-A- 0 248 301
WO-A-86/01151            FR-A- 1 535 966
FR-A- 2 136 324          US-A- 3 616 001
US-A- 3 674 584

## Description

La présente invention concerne la fabrication des pneumatiques. Plus précisément, elle se rapporte à la fabrication des armatures de renforcement de sommet que l'on trouve dans les pneumatiques à ceinture et à carcasse le plus souvent radiale.

Par le brevet US 4 952 259, l'état de la technique connait une tentative récente de fabriquer de tels renforcements non plus sous forme de produits semi-finis appelés "nappes", préparés à plat, que l'on incorpore par la suite lors de l'assemblage du pneumatique, mais directement sur le pneumatique en cours de fabrication, et à partir d'une seule bobine de fil. Cette proposition, qui est basée sur la projection d'un fil à la manière de la lanière d'un fouet, permet de balayer les angles courants des nappes dites de sommet, et elle permet de fabriquer des renforcements de carcasse radiale. Cependant, elle permet difficilement d'atteindre des angles faibles, et surtout, elle permet difficilement de projeter des tronçons de fil de grande longueur, donc de fabriquer des pneumatiques très larges.

L'objectif de la présente invention est de proposer un procédé de fabrication qui permette de réaliser, à partir d'une bobine de fil, tous les renforts de sommet, c'est-à-dire les renforts que l'on trouve sous la bande de roulement, quel que soit l'angle que forme le fil de ces renforts par rapport au plan médian perpendiculaire à l'axe de rotation du pneumatique.

Un autre objectif de l'invention est de proposer un procédé de fabrication qui permette de contrôler avec une grande précision l'angle exact que forme le fil, quelle que soit la position axiale considérée sur le sommet du pneumatique, c'est-à-dire aussi bien aux bords que au centre du renforcement de sommet.

En particulier, l'invention poursuit l'objectif de pouvoir poser le fil en hélice, c'est-à-dire selon un angle qui soit rigoureusement constant si on assimile le sommet du pneu à un cylindre. Un autre objectif de l'invention est de pouvoir poser le fil selon un angle variable, qui soit par exemple plus grand sur les bords que au centre du renforcement de sommet, l'angle étant comme de coutume mesuré par rapport au plan d'équateur du pneu (plan perpendiculaire à l'axe de rotation).

L'invention propose un procédé de fabrication d'un pneumatique construit progressivement sur un support monté rotatif autour d'un axe, en empilant les différents constituants du pneumatique dans l'ordre et à la place requise par l'architecture dudit pneumatique, procédé dans lequel au moins un renforcement de sommet est constitué à partir d'un fil délivré à au moins un tuyau de pose en amont duquel on effectue une coupe du fil pour en prélever des tronçons, le fil passant au travers dudit tuyau pour rejoindre une tête de pose qui est déplacée transversalement juste au dessus du support, les tronçons de fil et le support ayant des propriétés d'auto-adhésion.

On entend par "fabrication d'un pneumatique" une fabrication complète ou encore une fabrication partielle, consistant par exemple à fabriquer un bloc sommet dont au moins les renforcements sont fabriqués selon le procédé qui va être exposé.

Le terme "fil" doit bien entendu être compris dans un sens tout à fait général, englobant un monofilament, un multifilament, un câble ou un retors ou un assemblage équivalent, et ceci quelle que soit la matière constituant le fil ou le traitement qu'il a subi, par exemple un traitement de surface pour favoriser son auto-adhésion sur le support ou sa liaison intime avec du caoutchouc.

Lorsque l'on parle plus spécifiquement d'un tronçon de fil, on désigne plus précisément le morceau de fil allant d'un bord à l'autre du renforcement de sommet. Il s'agit d'un procédé fabriquant les renforcements à partir d'un seul fil, donc conçu pour utiliser en continu du fil fourni par exemple par une bobine, et qui réalise un renforcement (une nappe dans la terminologie usuelle) comportant des tronçons de fil, et non pas un fil continu qui serait par exemple trancané.

Le support dont il est question peut être un noyau métallique rigide démontable imposant la forme de la surface de la cavité interne du pneumatique. Mais cela pourrait aussi être une membrane gonflable armée, comme on en trouve dans les tambours de fabrication des pneumatiques. Cela pourrait être aussi une forme de révolution sur laquelle on fabrique un bloc sommet. Pour que le fil posé adhère sur le support, il suffit par exemple que celui-ci soit revêtu d'une couche de caoutchouc. Lorsque l'on utilise un noyau métallique comme support, il est préférable de vulcaniser ensuite le pneumatique sur celui-ci, pour faciliter l'extraction du noyau hors du pneumatique.

En effectuant un déplacement transversal juste au dessus du support, la tête de pose passe axialement d'un côté à l'autre du support, en survolant celui-ci à faible hauteur, pour accompagner le fil pendant toute sa dépose sur le support. Ce mouvement permet de l'amener au bon endroit pour le départ de la pose, et de le guider par dessus le support afin d'obtenir le tracé souhaité pour le fil dans le futur renforcement de sommet.

Selon une variante du procédé, la rotation du support constitue en elle-même un paramètre de réglage de l'angle de pose du fil. Notons que, dans cette variante, la tête de pose est déplacée transversalement selon une trajectoire sensiblement parallèle à l'axe de rotation du support. L'angle de pose est réglé par une rotation du support coordonnée au mouvement transversal de la tête de pose. On répète ce mouvement, qui définit un cycle de base, jusqu'à ce que la totalité du renforcement soit en place sur le support. Bien entendu, entre la pose de deux fils ajacents, le support s'est décalé, par rapport à la trajectoire de la tête de pose, d'une valeur correspondant au pas de pose souhaité.

L'invention s'étend aussi à une machine de fabrication d'un renfort de sommet pour pneumatique, comportant un distributeur de fil, des organes de pose du fil à l'endroit voulu sur un support, et des moyens d'entraînement du support en rotation autour de son axe de symétrie de révolution,

caractérisée en ce qu'elle comporte des moyens de coupe pour délivrer des tronçons de fil, disposés en amont des organes de pose, en ce que la sortie du distributeur de fil délivre le fil aux organes de pose en un point fixe dans l'espace situé radialement au dessus du support, et en ce que les organes de pose comprennent essentiellement

- au moins un tuyau de pose disposé en aval du distributeur de fil, le fil délivré étant enfilé dans l'entrée du tuyau de pose pendant que celle-ci est sensiblement en regard de ladite sortie du distributeur de fil et à faible distance de celle-ci, le fil cheminant à l'intérieur du tuyau de pose jusqu'à une tête de pose solidaire du tuyau de pose, et
- des moyens permettant de déplacer transversalement la tête de pose juste au dessus du support.

Dans le cas où la machine est utilisée pour mettre en oeuvre le procédé de l'invention, le fil est motorisé en amont du tuyau de pose dans lequel il est enfilé, et est coupé en amont de l'entrée du tuyau de pose pour en prélever des tronçons. La coupe en amont permet de motoriser le fil à vitesse constante, gage de grande précision et de parfaite régularité. On pourrait couper en aval du tuyau de pose à condition de pouvoir délivrer le fil par une motorisation par saccades (vitesse nominale, vitesse nulle, vitesse nominale, ...). De préférence, l'avance initiale du fil dans le tuyau de pose et la coupe du fil doivent être réglées pour que les bords de chaque tronçon se déposent à l'endroit souhaité sur le support. De préférence, la longueur du tuyau de pose est ajustée en fonction de la longueur du tronçon à poser.

La machine de cette invention permet aussi de réaliser un renfort en un seul fil continu (sous réserve du fait que le fil métallique ne peut pas être plié à 180°) : il suffit de ne pas actionner la coupe du fil prélevant des tronçons, et de ne pas actionner la motorisation du fil pour éviter tout conflit entre celle-ci et l'appel du fil par la rotation du support. Dans ce cas, on peut poser le fil en continu par trancanage.

Dans la suite, on décrit une application de l'invention dans laquelle on pose des tronçons de fil, et non pas un fil continu. Le fil posé est un câble métallique de n'importe quel type couramment utilisé pour constituer les renforts de sommet. De préférence, le fil est revêtu de caoutchouc, pour une parfaite adhésion sur le support qui présente au fil une surface revêtue de caoutchouc cru.

De préférence, la coupe du fil est installée juste à l'endroit où le fil est enfilé dans l'entrée d'un tuyau de pose. Le distributeur de fil comporte alors un ensemble de motorisation du fil permettant d'imposer au fil une avance choisie, délivrant le fil à un dispositif de coupe du fil pour en prélever des tronçons.

Pour déplacer transversalement la tête de pose, on utilise par exemple un brin souple d'entraînement monté sur un circuit de guidage dont une partie est disposée transversalement par rapport au support sur toute la largeur de celui-ci, la tête de pose étant accrochée au brin d'entraînement. La machine comporte des moyens assurant le mouvement du brin d'entraînement. Le brin souple est par exemple une chaîne (comme dans les illustrations de l'invention), ou une courroie ou un câble entrainé sans glissement.

On a indiqué qu'une partie du circuit de guidage est disposée transversalement. Cela signifie que sa partie assurant effectivement le guidage de la tête pendant qu'elle dépose le fil se développe dans une direction ayant une composante axiale par rapport au support.

De façon avantageuse, la tête de pose est déplacée transversalement selon une trajectoire sensiblement comprise dans un plan méridien (c'est-à-dire un plan qui comprend l'axe de rotation du support). De la sorte, le guidage de la tête pendant la pose se fait sur une distance courte, et surtout la distance le long de laquelle il est nécessaire de guider est indépendante de l'angle de pose, que l'on règle comme expliqué ci-dessous.

Dans ce cas, l'angle de pose des tronçons de fil est réglé en coordonnant la vitesse des moyens de déplacement de ladite tête de pose et la vitesse d'entraînement en rotation du support. Fondamentalement, l'angle de pose du fil ne dépend alors que de la combinaison des deux vitesses suivantes : composante axiale de la vitesse transversale de la chaine, et vitesse tangentielle à la surface du support, due à la rotation de celui-ci.

Si l'on guide selon une trajectoire faisant un angle bien plus faible que 90°, par exemple l'angle de pose du fil sur le support, on doit courber de façon plus importante la trajectoire de guidage pour rester sensiblement toujours à égale distance du support.

Tous les détails de réalisation de l'invention sont expliqués dans la suite, avec l'aide des figures jointes.

La figure 1 est une perspective générale montrant les organes essentiels d'une première machine selon l'invention.

La figure 2 est un schéma explicitant le procédé de pose des tronçons de fil selon l'invention.

La figure 3 illustre une variante de la première machine.

Les figures 4 et 5 sont les schémas explicitant le procédé de pose des tronçons de fil correspondant à la variante ci-dessus.

La figure 6 illustre une autre variante de la première machine.

La figure 7 est un schéma explicitant notamment le fonctionnement de la variante de la figure 6.

La figure 8 est une perspective générale montrant les organes

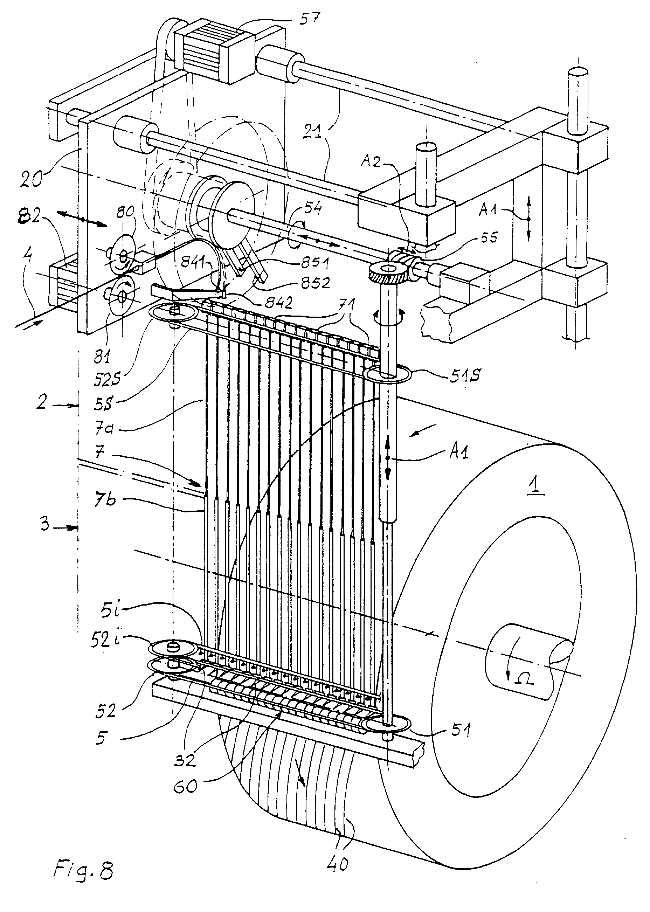

La figure 8 est une perspective générale montrant les organes essentiels d'une seconde machine.

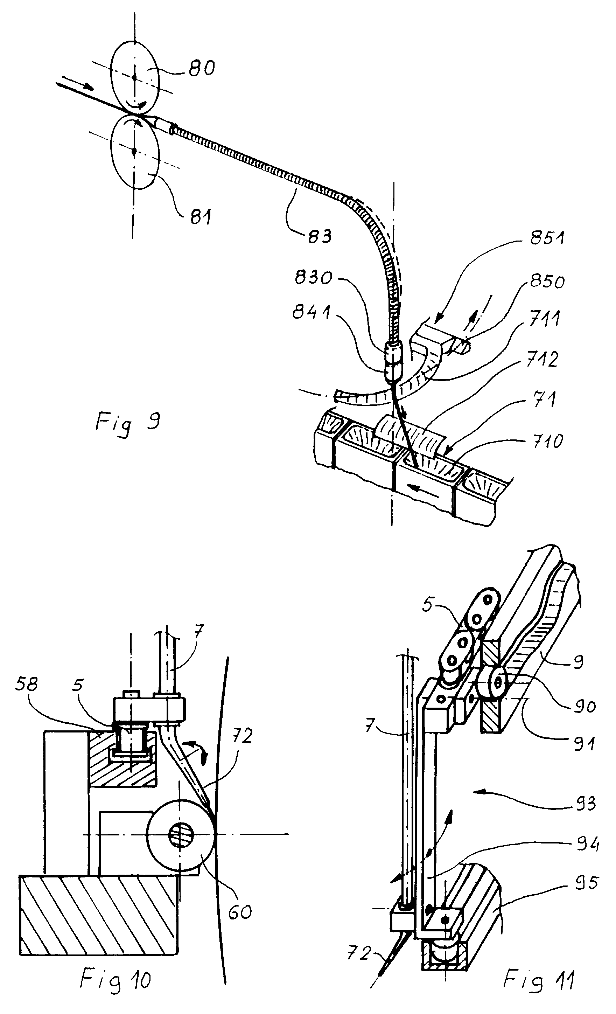

La figure 9 montre un détail de l'alimentation en fil.

La figure 10 montre la sortie des tuyaux de pose.

La figure 11 illustre une variante de la seconde machine.

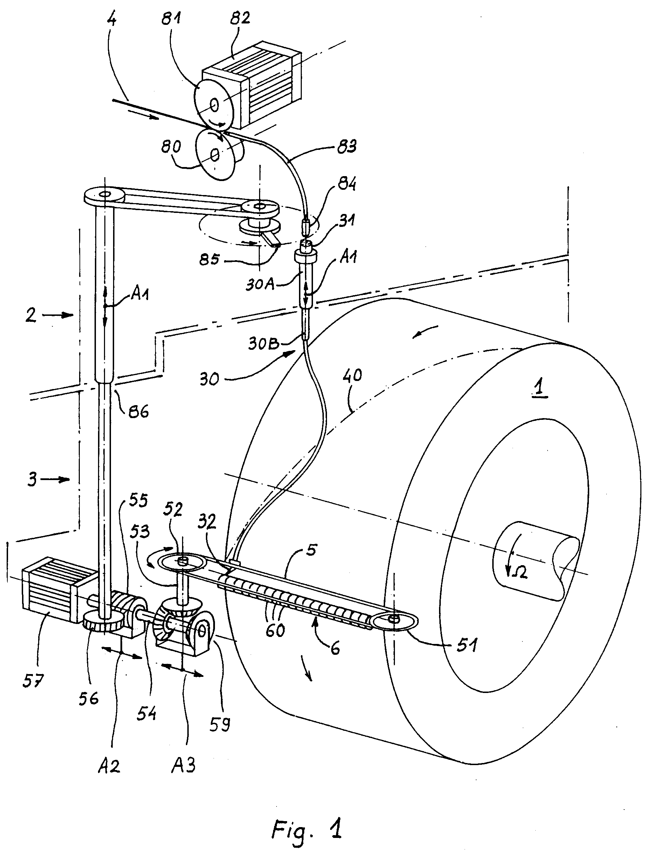

A la figure 1, on aperçoit un noyau rigide 1 constituant le support sur lequel on fabrique le renforcement de sommet. Ce support pourrait également être constitué par tout type de forme définissant la surface sur laquelle on va disposer les tronçons de fils constituant le renforcement, comme par exemple une membrane armée gonflable, ou bien une forme réglable en diamètre du genre de celle utilisée dans les machines de confection de bloc sommet imposant un profil purement cylindrique, ou bien galbé transversalement. Le noyau 1 est déjà revêtu de tous les constituants qu'il doit recevoir avant l'implantation du renforcement de sommet. Le noyau 1 est entraîné en rotation dans le sens indiqué par la flèche $\Omega$.

Le distributeur de fil comporte un emsemble de motorisation du fil et un dispositif de coupe du fil. Le fil 4 est dévidé hors d'une bobine (non représentée) et il est motorisé par deux galets 80, 81 entre lesquels il est pincé. Le galet 81 est entraîné par le moteur 82. Les galets 80, 81 sont couverts d'un revêtement anti-dérapant comme du caoutchouc vulcanisé. Grâce à ce système de motorisation, il est possible d'imposer au fil 4 une avance bien précise de sorte que l'on puisse connaître en continu la mesure précise de la quantité de fil 4 appelée, de par la connaissance du nombre de tours du moteur 82 et par la démultiplication installée.

N'importe quel type de fil 4 peut être motorisé et mesuré de cette façon.

A la sortie des galets 80, 81, le fil 4 est introduit dans un tube souple 83, dont l'extrémité renforcée constitue un canon 84 supportant le fil 4 lorsqu'il est tranché par le couteau rotatif 85. Au moment où le couteau rotatif 85 sectionne le fil 4, celui-ci se trouve immobilisé un très bref instant. Il convient donc que le tube souple 83 puisse s'allonger suffisamment pour contenir momentanément la quantité de fil 4 qui continue à être propulsé par les galets 80, 81.

En aval de l'ensemble du distributeur de fil, on trouve les organes de pose du fil. Le canon 84 constitue la sortie du distributeur de fil. Les organes de pose comprennent essentiellement un tuyau de pose 30 dont l'entrée 31, point fixe dans l'espace, se situe au regard du canon 84. L'entrée 31 du tuyau de pose est disposée à l'aplomb du noyau 1, sensiblement dans le plan médian dudit noyau 1. La sortie du tuyau de pose est directement raccordée à une tête de pose 32, qui est déplacée transversalement le long du noyau 1. Le tuyau de pose 30 doit être constitué en une matière flexible puisqu'il relie un point fixe dans l'espace - l'entrée 31 - et un point mobile dans l'espace - la tête de pose 32 -.

La tête de pose 32 est accrochée à une chaîne 5, montée sur deux poulies 51, 52 disposées de part et d'autre du noyau 1. Ceci matérialise le circuit de guidage de la tête de pose. Les poulies 51 et 52 sont écartées d'une distance un peu supérieure à la largeur du renforcement de sommet le plus large qu'il faut réaliser. L'axe de rotation des poulies 51 et 52 est perpendiculaire au rayon du noyau passant par la chaîne d'entraînement 5, et est aussi perpendiculaire à l'axe de rotation du noyau 1.

Une telle disposition est évidemment spécialement adaptée pour entraîner la tête de pose toujours dans le même sens. La tête de pose chemine le long du support, de gauche à droite pour poser les tronçons inclinés en hélice "à droite", puis revient à son point de départ sans inversion de la vitesse tangentielle. Mais l'on pourrait facilement construire une machine dans laquelle la tête de pose fait un mouvement de va-et-vient : déplacement transversal pour la pose, puis retour sans pose par un mouvement en marche arrière sur la même trajectoire. Le système à chaîne sur poulies peut aussi être utilisé de cette façon.

La poulie 52 est calée sur un arbre 53 qui est lui-même entraîné en rotation par l'arbre 54 via un renvoi d'angle 59. L'arbre 54 est entraîné en rotation par le moteur 57. Une vis sans fin 55 est montée coulissante sur l'arbre 54. Une roue dentée 56 est engrainée sur le pignon à vis sans fin 55 et transmet le mouvement à un arbre téléscopique 86. L'arbre téléscopique 86 transmet le mouvement au couteau rotatif 85 par l'intermédiaire d'une courroie.

De préférence, la machine comporte un dispositif de rouletage destiné à parfaire l'adhésion des fils 4 posés sur le noyau 1. A tout le moins, il importe que l'adhésion du fil sur le support soit suffisante pour que, dès que le fil est coupé, la rotation du support entraine le tronçon, sans glissement aléatoire préjudiciable à la précision de pose. Ce dispositif de rouletage est ici constitué par une rampe 6 de galets presseurs 60 embrassant toute la largeur du noyau 1, et disposés parallèlement à la chaîne d'entraînement 5 juste au point de rencontre du fil 4 sur le noyau 1. De cette façon, le dispositif de rouletage est monté parallèlement au circuit du guidage de la tête de pose.

Il est important de noter que la coupe arrête le fil 4 un très bref instant. Après la coupe, le tronçon de fil ne bénéficie plus de la motorisation installée en amont. C'est pourquoi on règle la séquence des opérations pour que l'extrémité du fil 4 rejoigne le noyau 1 juste avant que le fil 4 ne soit coupé. Après la coupe, le mouvement du fil 4 est causé par le mouvement du noyau 1 sur lequel il adhère.

Notons encore que si la vitesse du fil 4 est supérieure à la vitesse périphérique du noyau 1, il est souhaitable que la coupe intervienne juste après que le fil 4 soit pincé entre galets 60 et noyau 1, le léger supplément de longueur s'accumulant momentanément entre l'entrée 31 et le canon 84. En revanche, si la vitesse du fil 4 est inférieure à la vitesse périphérique du noyau 1, il convient de couper le fil 4 juste avant qu'il ne soit pincé entre galets 60 et noyau 1. On positionne alors la rampe 6 pour que le premier galet 60 pince le fil 4 lorsqu'il est amené au devant de celui-ci par la tête de pose 32.

Tous les éléments qui viennent d'être décrits sont agencés en deux ensembles : un ensemble d'alimentation 2 et un ensemble de pose 3. L'ensemble de pose 3 comprend la tête de pose 32 et son mécanisme d'entraînement et de guidage. Cet ensemble de pose 3, par un coulissement radial, peut s'éloigner ou se rapprocher de l'axe de rotation du noyau 1 pour régler le rayon de pose des fils 4. L'ensemble d'alimentation comprend essentiellement la partie alimentation en fil et coupe de celui-ci. Le tuyau de pose 30 relie l'ensemble d'alimentation 2 à l'ensemble de pose 3. Pour des questions de réglage qui vont être expliquées ci-dessous, le tuyau de pose 30 comporte deux sections 30A, 30B emmanchées l'une dans l'autre. La section 30A fait partie de l'ensemble d'alimentation 2, alors que la section 30B fait partie de l'ensemble de pose 3.

Les réglages principaux de la machine sont schématisés par les flèches A1, A2 et A3. Le réglage A1 est un mouvement de coulissement de l'ensemble d'alimentation 2 par rapport à l'ensemble de pose 3. Le but de ce mouvement est de faire varier la longueur utile du tuyau de pose 30, pour s'adapter à la longueur d'un tronçon 40 de fil 4 qu'il faut poser. Le couteau rotatif 85 prélève un tronçon 40 de fil 4 juste au moment où l'extrémité du fil 4 rejoint le noyau 1. Le tuyau de pose 30 doit donc être capable de stocker toute la longueur du tronçon 40 qu'il faut poser. Pour faire varier la longueur utile du tuyau de pose 30, la section 30A est emmanchée à l'intérieur de la section 30B et on peut régler la profondeur de pénétration par le réglage A1. Ces deux sections 30A et 30B peuvent tourner l'une par rapport à l'autre afin d'autoriser la tête de pose 32 à tourner globalement sur elle-même comme elle y est forcée lors du mouvement de la chaîne d'entraînement 5.

Le réglage A2 permet de positionner le bord du renforcement de sommet sur le noyau 1. Un premier réglage manuel impose de faire parvenir le fil 4 jusqu'à la tête 32 du tuyau de pose 30 afin de régler la position souhaitée du bord du renforcement de sommet. De petites variations autour de cette position imposent de déphaser l'intervention du couteau rotatif 85 par rapport au mouvement de la chaîne d'entraînement 5. Ce déphasage est obtenu en faisant coulisser le pignon à denture à vis sans fin 55 le long de l'axe 54. Le réglage A2 est indispensable pour passer par exemple de la première nappe de sommet (pour reprendre la terminologie usuelle) à la seconde car celles-ci n'ont en général pas la même largeur et les bords ne sont pas exactement superposés radialement.

Le réglage A3 consiste à changer de pignon sur le renvoi d'angle 59, afin d'inverser le sens du mouvement de la chaine 5, sans changer le sens de rotation du couteau 85, car la forme de celui-ci impose de l'utiliser toujours dans le même sens (voir ci-dessous). Les réglages A1, A2 et A3 peuvent être très aisément automatisés.

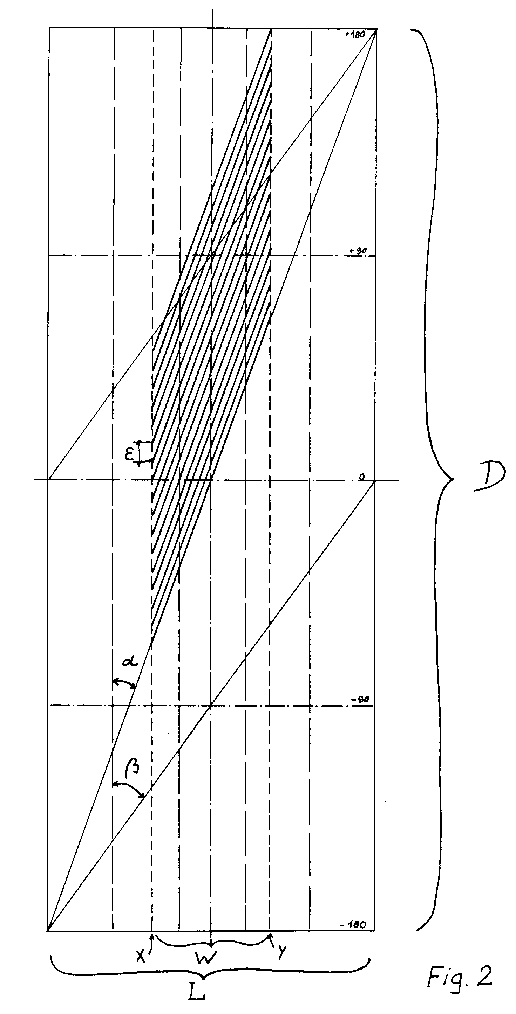

A la figure 2, on a représenté un développement dans un plan de la surface sur laquelle on dépose les fils de renforcement. Pour simplifier le raisonnement, on suppose que cette surface sur laquelle on construit le renforcement est un cylindre. La largeur W du renfort apparaît en abscisse sur les diagrammes, et le développement D apparaît en ordonnée. Les repères angulaires portés en ordonnée facilitent la compréhension du principe de pose des fils de renforcement.

La chaîne 5 qui assure le mouvement de la tête de pose est représentée de façon développée, en abcisse sur le diagramme, par le segment L. La longueur L de la chaîne 5 est proportionnelle à la tangente de l'angle de pose $\alpha$. On remarque aussi que la longueur du segment L est supérieure au double de la largeur W des renforts de sommet. Cela permet de guider rigoureusement la tête 32 sur toute la largeur du renfort de sommet, en disposant les poulies 51 et 52 un peu au-delà de cette Zone de guidage.

Lorsque la tête 32 fait un tour complet devant le noyau 1, cela correspond sur la représentation développée, à un passage de gauche à droite le long du segment L. Le point X du trajet L de la tête de pose 32 correspond à un bord du renforcement de sommet. Le point Y sur le trajet L correspond à l'autre bord du renforcement de sommet. Une partie seulement du diagramme à plat représente le renforcement de sommet : il s'agit de la surface comprise entre les horizontales correspondant à - 180° et + 180° et les verticales élevées à partir des points X et Y. Pour rappel, afin que le bord du tronçon 40 de fil posé corresponde toujours au bord du renforcement de sommet, il est nécessaire que les mouvements de la chaîne 5 et du couteau rotatif 85 soient synchronisés, comme expliqué ci-dessus.

Si on fait faire exactement un tour au noyau 1 pendant que la chaîne 5 fait également un tour complet, alors l'angle d'hélice obtenu vaut $\alpha$ (voir figure 2). Un renforcement complet comporte un grand nombre de tronçons 40 adjacents séparés du pas de pose $\varepsilon$. Pour fabriquer le renforcement en continu, on commande les mouvements de telle sorte que pour un tour complet de la chaîne 5, le noyau 1 est tourné de 360° plus une fraction de 360° correspondant au pas de pose $\varepsilon$. En toute rigueur, ceci change légèrement l'angle d'hélice $\alpha$ puisque cet angle est représenté par une diagonale tracée dans le rectangle dont la largeur correspond au développement de la chaîne 5 et la longueur correspond au mouvement circonférentiel relatif entre le noyau 1 et la tête 32 de pose 30. L'angle correspondant au pas de pose étant très petit, on suppose dans la suite du raisonnement que l'altération de l'angle d'hélice qui en résulte est négligeable devant $\alpha$. Pour réaliser un renfort de sommet, on règle les mouvements de rotation du noyau 1 et de la chaîne 5 dans un rapport 1/1 si l'on souhaite effectuer une pose à angle $\alpha$, et l'on effectue autant de tours qu'il y a de tronçons 40 dans un renforcement de sommet.

Examinons maintenant les possibilités de réglage de l'angle de pose d'un fil 4 offertes par la machine décrite. Afin de pouvoir travailler à des cadences élevées, il est préférable que tous les moteurs d'entraînement tournent à vitesse constante, surtout le moteur d'entraînement du noyau 1. Dans ce cas, la trajectoire de la tête de pose 32 du tuyau de pose 30 est toujours représentée par une ligne inclinée dans un diagramme tel que celui de la figure 2. Une variation de la vitesse nominale de la chaîne 5 a deux conséquences : tout d'abord le changement de l'angle d'hélice, ce qui est la conséquence recherchée, et également le changement de la fréquence de pose des tronçons de fils sur le noyau 1 : par exemple, si on double la vitesse de chaîne 5, on pose deux tronçons 40 pour un tour de noyau 1 (plus une fraction de tour à adapter en fonction du pas de pose final souhaité).

Si on multiplie la vitesse de chaîne par un nombre non entier, outre les deux conséquences exposées ci-dessus, on s'aperçoit que l'on ne peut plus poser chacun des tronçons toujours à la même position axiale souhaitée. Les bords de tronçons n'étant plus alignés circonférentiellement, on aboutit à une impasse. Il faut donc imposer une condition que l'on pourrait appeler "bord de nappe", ce qui conduit à n'admettre que des multiples, ou des sous-multiples de la vitesse de chaîne correspondant à l'angle $\alpha$ tracé sur la figure 2.

Enfin, le pas de pose est un paramètre qu'il faut également maîtriser, puisqu'il est conditionné par l'architecture du pneumatique à fabriquer. Le pas de pose conduit à modifier légèrement la vitesse du noyau, ce qui n'a aucune incidence sur la position des bords de tronçons 40. La vitesse du noyau est ainsi choisie en tenant compte de l'angle d'hélice souhaité, de la fréquence de pose, et enfin du pas de pose.

Avec une telle machine, il faut que l'angle $\alpha$ de pose respecte la condition suivante :

$$\text{tg } \alpha = k \frac{L}{D} \text{ avec } k = ..., \frac{1}{3}, \frac{1}{2}, 1, 2, 3, 4, ...$$

A titre d'exemple, si l'on double la vitesse de la chaîne 5 en laissant la vitesse de rotation du noyau 1 inchangée, on obtient l'angle $\beta$ (voir figure 2).

Dans une autre variante, la machine comporte plusieurs tuyaux de pose, rejoignant tous une tête de pose, et ayant tous une entrée par laquelle le fil est enfilé. La machine comporte un dispositif permettant de présenter successivement chacune de ses entrées au dispositif de coupe pour introduction du fil. Le mouvement du dispositif de présentation est synchronisé au mouvement du brin d'entraînement.

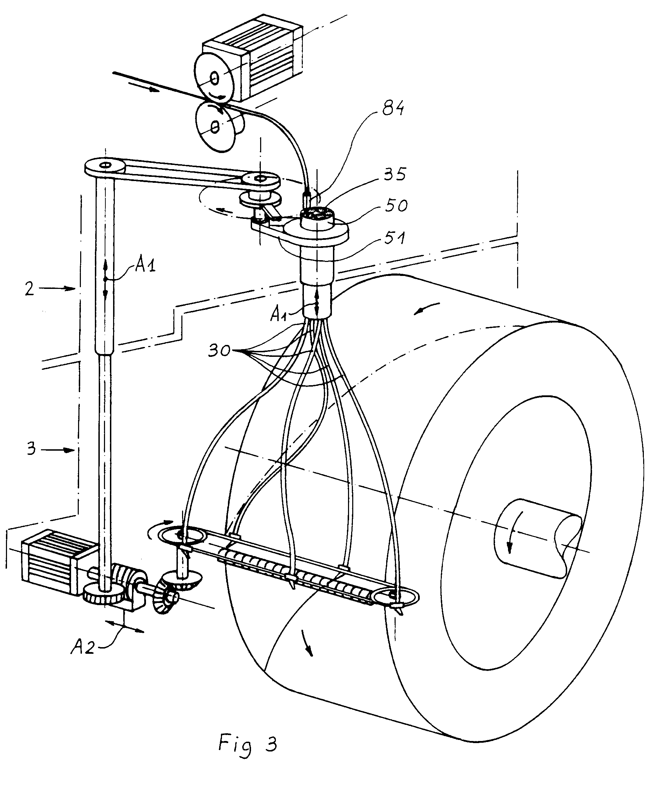

Supposons que la machine comporte cinq tuyaux 30 (voir figure 3), équidistants sur la chaîne 5, l'entrée de chaque tuyau 30 étant fixée à un orifice 35 d'un barillet 50 constituant le dispositif de présentation. Le barillet 50 est monté de façon à présenter successivement chacun de ses orifices 35 à l'ensemble de motorisation et de coupe du fil pour introduction du fil à l'intérieur d'un des orifices. Le mouvement du barillet 50 est synchronisé au mouvement de la chaîne 5 d'entraînement.

En respectant un rapport de vitesse de 1:1 pour les vitesses du noyau et de la chaîne d'entraînement 5, on retrouve le même angle de pose $\alpha$ que pour la variante précédente. Grâce aux cinq têtes de pose, la fabrication d'un renforcement de sommet débute à cinq endroits séparés circonférentiellement sur le noyau d'un angle de 72°. Le renforcement complet est totalement fabriqué cinq fois plus vite qu'avec la variante précédente.

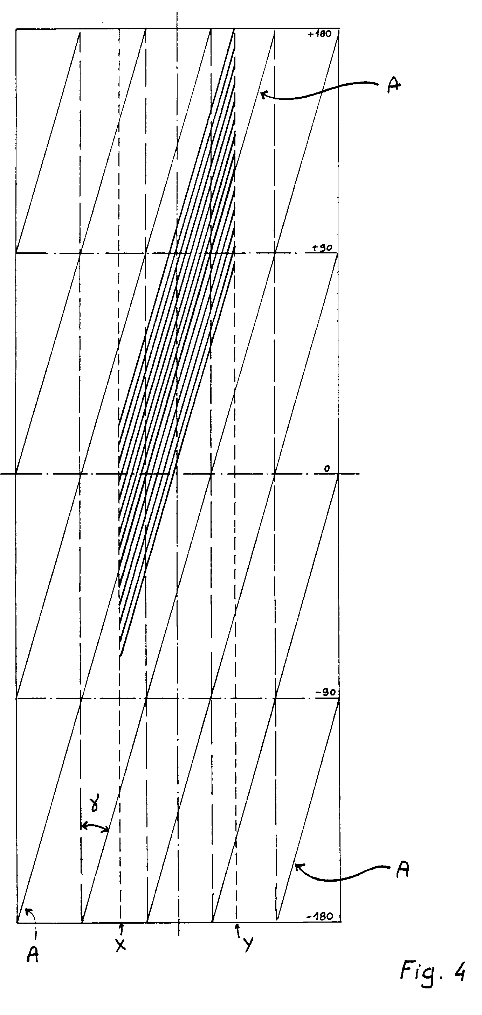

Mais le plus grand intérêt de cette variante est ailleurs. Elle permet en effet de régler plus finement l'angle sous lequel on pose le fil. Supposons que l'on ralentisse la vitesse de la chaîne 5, de 1/5e. Comme cela apparaît sur le diagramme à plat de la figure 4, le tracé correspondant à la trajectoire de la première tête de pose se développe sur un arc de 360° + 90° = 450°, parce que cela revient à présenter au distributeur de fil seulement quatre tuyaux pendant un tour de noyau. Ce tracé est repéré par la lettre A à la figure 4. On obtient un angle $\gamma$ tel que tg $\gamma$ = 4/5 tg $\alpha$.

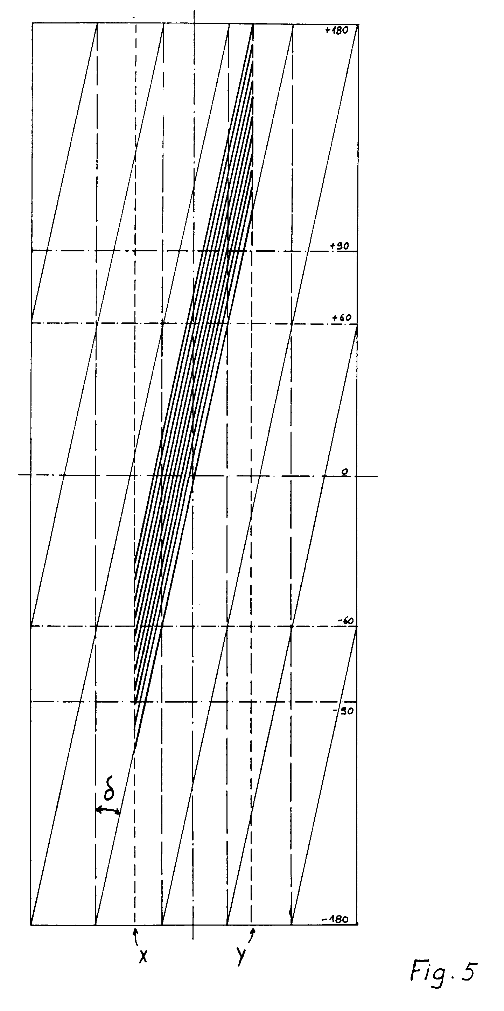

Si l'on ralentit encore la vitesse de la chaîne, par exemple de 2/5e, alors les trajectoires obtenues sont celles représentées à la figure 5, où l'angle de pose $\delta$ est tel que tg $\delta$ = 3/5 tg $\alpha$. On remarque que la finesse de réglage est bien plus grande.

Dès lors, on voit qu'il est possible de réaliser une machine de fabrication qui permet de respecter rigoureusement un angle constant pour la pose des fils de renforcement de sommet, et qui permet de régler cet angle par incréments suffisamment petits pour correspondre aux architectures souhaitées par les concepteurs de pneumatique. Il est important de noter que tous ces réglages sont obtenus en agissant seulement sur un rapport de deux vitesses et que les vitesses en elles-mêmes peuvent être constantes. On utilisera pour cela un grand nombre de tuyaux de pose, disposés de façon équidistante sur la chaîne 5. Parmi ces tuyaux de pose, on en présente au distributeur de fil un nombre quelconque (mais entier) par tour de support. Bien entendu, on ne peut poser alors que des tronçons de fil, puisque le fil doit être coupé en amont des tuyaux de pose.

Une autre façon de régler l'angle de pose $\alpha$ consiste à modifier la longueur de la chaîne elle-même. En se reportant encore à la figure 2, sachant que L est la longueur de la chaîne 5, on voit bien que si L grandit alors que D reste inchangé, la valeur de l'angle $\alpha$ va augmenter. En changeant le nombre de maillons de la chaîne et en adaptant la vitesse de commande pour avoir un tour de noyau 1 pour un tour de chaîne 5, on peut obtenir pratiquement n'importe quel angle de pose.

On vient d'expliquer que la machine de l'invention permet de poser un tronçon de fil de renforcement de sommet selon un angle rigoureusement constant. Or, le concepteur de pneumatique peut souhaiter, dans certains cas, que cet angle soit variable, par exemple que cet angle augmente lorsqu'on se rapproche du bord du renforcement de sommet. Le moyen d'y parvenir est de régler la vitesse de la chaîne 5 afin d'autoriser une vitesse variable de celle-ci tout en maintenant une vitesse de rotation constante du support 1.

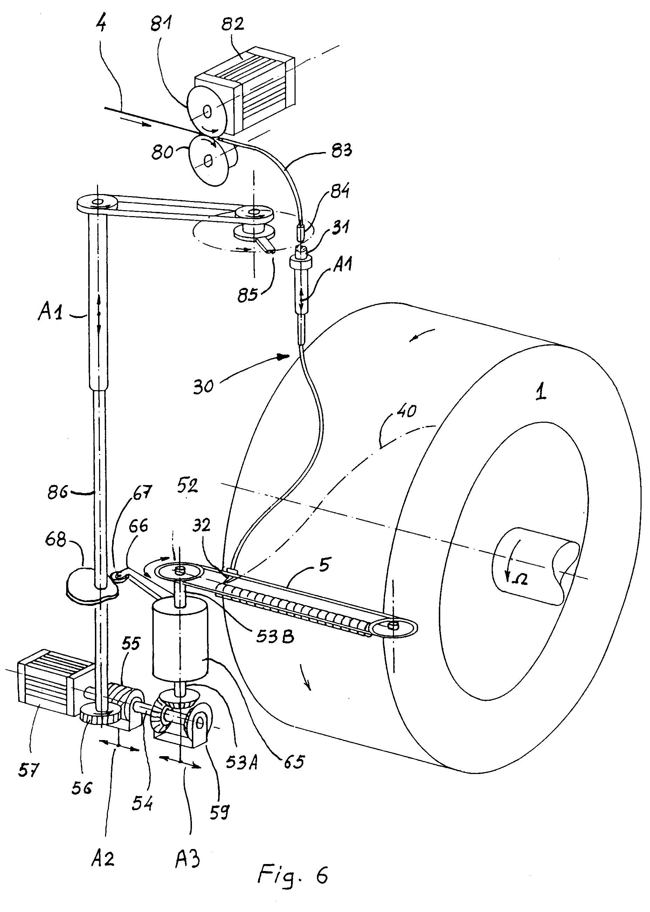

A la figure 6, on a représenté la modification qu'il convient de réaliser sur la machine de la figure 1, afin de pouvoir faire cette pose à angle variable. On considère que l'on part d'une vitesse moyenne de la chaîne 5 qui donne un angle moyen $\alpha$ de pose du fil de renforcement. Le principe consiste à ajouter, ou à retrancher un peu de vitesse au mouvement de la chaîne 5. Les moyens pour régler la vitesse de la chaîne 5 sont constitués par un premier arbre 54 entraîné à une vitesse directement proportionnelle à la vitesse du noyau 1. Jusque là, il n'y a donc rien de changé par rapport à la machine de base telle qu'illustrée avec la figure 1.

Mais cette fois, au lieu d'entraîner en direct la poulie 52, le premier arbre 53A attaque le premier planétaire d'un différentiel 65. Un second arbre 53B est entraîné par le second planétaire du différentiel 65, et celui-ci entraîne la poulie 52, qui elle-même entraîne la chaîne 5. La couronne porte-satellite du différentiel 65 est solidaire d'un levier 66 sur lequel est fixé un galet 67 qui coopère avec une came rotative 68 entraînée à une vitesse angulaire directement proportionnelle à celle du premier arbre 53A. On utilise ici un différentiel pour sa capacité à ajouter ou à retrancher de la vitesse à la vitesse de rotation d'un arbre d'entrée, pour obtenir une vitesse variable sur un arbre de sortie, en agissant sur le troisième arbre du différentiel.

Le profil de la came 68 est dessiné pour imprimer deux ralentissements et deux accélérations à la chaîne 5. La came 68 est calée sur l'arbre 86 pour que la première accélération intervienne avant que la tête de pose 32 parvienne en regard de l'extémité latérale du renforcement de sommet. Puis on ralentit la tête 32. Puis on l'accélère à nouveau lorsque la tête de pose 32 parvient à l'autre bord du renforcement de sommet, et enfin on ralentit la chaîne 5 pendant le mouvement de retour pour boucler le cycle.

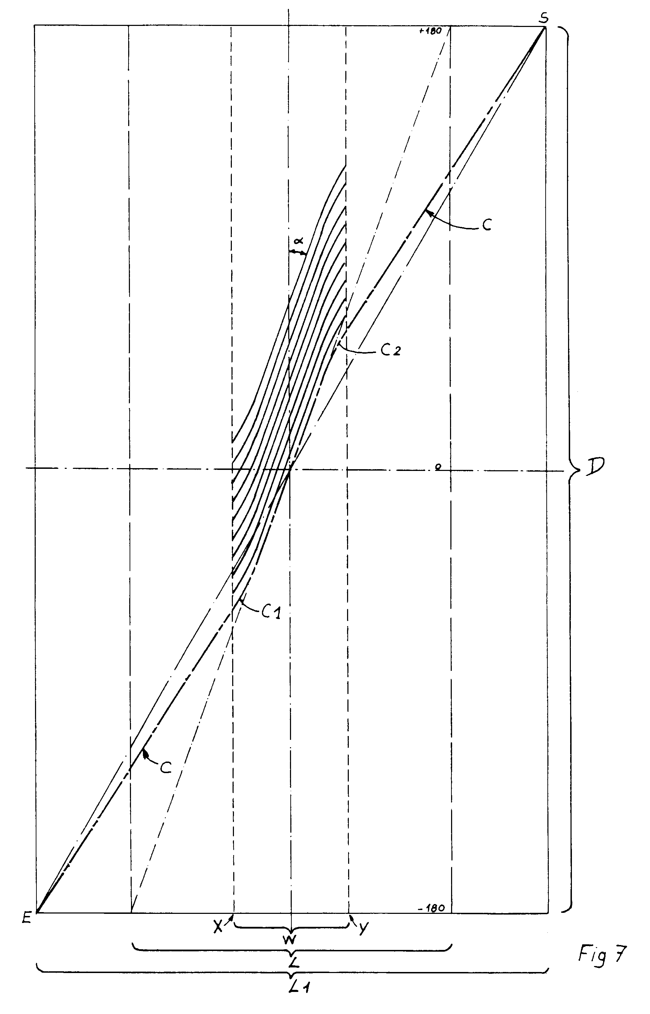

A la figure 7, on voit, en traits pleins, le développement dans un plan correspondant à la variante de la figure 6. On apperçoit en $C_1$ et en $C_2$ les portions déviées par rapport à la diagonale, déviations qui sont dues à la came 68.

La même figure 7 montre en traits mixtes forts C comment on peut utiliser une came pour régler l'angle de pose $\alpha$. On a expliqué ci-dessus que l'on pouvait obtenir n'importe quel angle de pose en changeant la longueur de la chaîne. On peut aussi le régler, à partir d'une longueur de chaîne donnée (par exemple $L_1$), en adoptant une came qui donne l'angle souhaité $\alpha$ dans la zone de pose comprise entre les verticales élevées en X et en Y, et qui permet de rejoindre les extrémités E et S de la diagonale que l'on obtiendrait avec une chaîne de longueur $L_1$ sans l'utilisation d'une came. Sur une machine industrielle, le changement d'une came peut être une opération plus aisée que le changement d'une chaîne. On dispose là encore d'une possibilité rendant la machine très polyvalente.

Notons encore que, plus l'angle de pose sera grand, plus la longueur de la chaîne convenable grandit. Mais en même temps la longueur du fil posé diminue pour une largeur de nappe W inchangée. Il faut donc que la longueur du tuyau 30 diminue, ce qui peut rendre ses mouvements trop tendus. Pour s'affranchir de cette difficulté, on peut toujours choisir de diviser la longueur de la chaîne par deux. On aura donc deux passages de chaîne pour un tour du noyau. On peut en profiter pour doubler la cadence de pose, à condition d'avoir une came adaptée si l'on utilise une came.

On a fait découvrir ci dessus l'intérêt qu'il y a de construire une machine qui comporte un grand nombre de tuyaux de pose. Ceux-ci sont accrochés et régulièrement espacés tout le long de la chaîne 5 qui permet de les faire défiler par devant le support 1. La figure 8 illustre une telle machine. En utilisant par exemple 50 tuyaux 7, il est possible d'obtenir un réglage de l'angle $\alpha$ par incréments valant approximativement 20 minutes d'angle. On n'a pas représenté les tuyaux de pose accrochés sur la partie de la chaîne 5 la plus éloignée du noyau afin de ne pas surcharger la figure 6, et afin de ne pas masquer les tuyaux de pose accrochés sur la partie de la chaîne 5 adjacente au noyau 1.

Dans une telle machine, l'entrée des tuyaux de pose 7 est accrochée sur une chaîne d'entraînement secondaire 5S montée sur un circuit de guidage secondaire sensiblement parallèle au circuit de guidage des sorties 32 des tuyaux de pose. Le mouvement des deux chaînes d'entraînement est synchronisé. La chaîne secondaire 5S est montée sur les poulies 51S et 52S.

La poulie 51S est reliée à la poulie 51 par l'arbre télescopique A1 pour transmettre la motorisation entre les deux chaînes 5 et 5S. Tous les tuyaux 7 sont réalisés en deux sections 7a et 7b pouvant coulisser l'une dans l'autre.

La flèche A1 schématise le réglage de la longueur du tronçon de fil qui doit être posée sur le support 1. Ce réglage A1 est tout à fait analogue à ce qui a été expliqué en détail précédemment. Les organes de motorisation du fil (galet 80, 81 et moteur 82) et les organes de coupe du fil (couteau rotatif 85) sont tous disposés sur l'ensemble d'alimentation 2 qui peut être translaté de haut en bas selon les mouvements symbolisés par les flèches A1. Cette translation permet d'ajuster la longueur de câble stockée dans les tuyaux de pose 7.

Le moteur 57 doit entraîner aussi bien des organes situés sur l'ensemble de pose 3 (chaîne 5), que des organes situés sur l'ensemble d'alimentation 2 (couteau rotatif 85). Cette fois, contrairement à la première variante, le moteur 57 est embarqué sur l'ensemble d'alimentation 2. Il est monté sur une plaque 20 qui peut être translatée horizontalement sur les glissières 21 parallèles à l'axe du noyau 1. Les galets 80, 81 et leur moteur 82 sont également fixés sur cette plaque 20.

La plaque est en position gauche, comme représenté à la figure 8, pour des tronçons en hélice à droite. En effet, le fil 4 doit être enfilé dans le tube 7 se trouvant à l'aplomb du bord gauche du noyau 1. La plaque est translatée vers la droite pour poser les tronçons en hélice à gauche. Le positionnement s'effectue par une translation qui est une phase de réglage de la machine. Lorsque la machine est en fonctionnement, le fil est toujours introduit dans un tuyau de pose par le distributeur de fil lorsque la sortie de celui-ci (le canon 841, ou 842 respectivement) est positionnée à un point fixe dans l'espace.

On retrouve le réglage A2 dit de bord de nappe : la vis sans fin 55 est montée coulissant sur l'arbre 54.

L'ensemble des tuyaux de pose 7 télescopiques forme un rideau qui défile en permanence devant le noyau 1. Le sytème de motorisation du fil introduit celui-ci à l'entrée 71 de chacun des tuyaux de pose 7.

A la figure 9, on voit que l'entrée 71 de chacun des tuyaux de pose 7 forme un entonnoir 710 allongé dans le sens du mouvement de défilement des tuyaux de pose 7. Le déviateur 711 oriente le fil 4 de façon à ce que, aidé par le déflecteur 712, il pénètre à l'intérieur de l'entonnoir 710 qui se trouve avant l'entonnoir en regard du canon 841. Pendant le temps nécessaire à l'introduction d'un tronçon 40 de fil 4 à l'intérieur d'un tuyau de pose 7, l'entrée 71 dudit tuyau de pose 7 se déplace latéralement d'une valeur correspondant sensiblement à l'intervalle entre deux tuyaux de pose 7 adjacents.

La forme en entonnoir 710 de l'entrée 71 permet de s'accommoder de ce déplacement transversal. L'entonnoir est symétrique pour que l'accomodation agisse dans les deux sens (les nappes sommet sont en général d'angles opposés). La coupe du fil intervient lorsque celui-ci est bien aligné sur le chemin le plus court entre le canon 841 et le fond de l'entonnoir 710, pour que, à la sortie, le tronçon de fil 4 se présente idéalement pour être pincé entre galets 60 et noyau 1.

En outre, le couteau rotatif 851 comporte du côté arrière de son mouvement, une dépouille 850 qui permet aussitôt que possible de libérer la sortie du canon. En effet, pendant la coupe du fil 4, celui-ci continue à être motorisé et il faut éviter qu'il s'accumule en trop grande quantité dans le tube souple 83.

Le couteau 841 est entraîné en rotation par l'arbre 54. Or celui-ci commande aussi le mouvement des chaînes 5 et 5S. On sait qu'il faut pouvoir inverser ce mouvement pour poser tantôt des tronçons en hélice à gauche, tantôt des tronçons en hélice à droite, ce qui se fait dans cette machine par renversement du sens de rotation du moteur 57.

Or un couteau tel que le couteau 851 ne peut pas être réversible puisqu'il comporte une dépouille 850. D'où la présence d'un second couteau 852 utilisé pour la pose des tronçons en hélice à gauche. Le couteau 851 tourne en regard du canon 841, qui est solidaire de la plaque 20. Le couteau 852 tourne en regard du canon 842, lui aussi solidaire de la plaque 20. Les couteaux 851 et 852 sont translatés en même temps que les canons 841 et 842. Lorsque la plaque 20 a positionné le couteau convenable à la position souhaitée, la sortie 830 du tube souple 83 est placée en regard du canon correspondant par un mécanisme non représenté.

A la figure 10, on voit que la chaîne 5 est engagée sur un guide-chaîne 58 qui épouse d'aussi près que possible la forme du noyau 1. Toutes les sorties 72 des tuyaux de pose 7 sont attachées à la chaîne 5. On retrouve sur cette machine une rampe de galets 60 dont le rôle est de parachever l'ancrage de chaque tronçon 40 sur le noyau 1, comme cela a été expliqué ci-dessus.

De préférence, on oriente chaque tête de pose 72 pour que le fil 4 qui sort de celle-ci se présente par rapport au noyau 1 selon un angle de même signe que l'angle d'hélice souhaité. Il faut pouvoir inverser cette orientation pour passer d'une nappe de sommet à l'autre. A cette fin, on utilise une chaîne d'inversion 5i, montée sur des poulies 52i (figure 8).

Une commande (non représentée) permet de modifier la position angulaire de la poulie 52i par rapport à la poulie 52. Chaque tube 7 est relié à la chaîne d'inversion 5i par des petites biellettes qui imposent un couple de rotation sur chaque tube 7, dans le sens convenable.

La figure 11 permet d'expliquer comment il est possible de faire varier légèrement la vitesse de chacune des têtes de pose 72. Le but de cette variation est le même que celui qui a été expliqué ci-dessus, à savoir poser tous les tronçons 40 selon un angle variable. Il convient donc de ralentir puis d'accélérer individuellement chacune des têtes de pose 72.

Chaque tête de pose 72 est accrochée à la chaîne d'entraînement 5 par l'intermédiaire d'un basculeur 93 comportant un axe de pivotement 91 et deux leviers. Un galet 90 est monté à l'extrémité de l'un de ces leviers. La tête de pose 72 est montée à l'extrémité de l'autre levier. Le galet 90 est engagé sur une came 9 orientée parallèlement au circuit de guidage de la chaîne 5. Le profil de la came permet, pour une vitesse constante de la chaîne 5 d'entraînement, de faire varier la vitesse transversale de chaque tête de pose 72 individuellement. Le tube 7 doit bien entendu présenter une souplesse suffisante.

On comprend que le rôle de la chaîne 5 est de guider et d'entraîner l'axe 91 de pivotement des basculeurs 93. La tête de pose 72 de chaque tuyau de pose 7 est accrochée à l'extrémité 94 des basculeurs 93. Cette extrémité 94 est guidée latéralement grâce aux rails 95.

A la lumière de cette description, l'homme du métier pourra facilement réaliser des variantes et utiliser des adaptations sans sortir du cadre de la présente invention. On peut souhaiter par exemple poser des fils en matière textile. Tous les fils ne présentant aucune résistance à la compression doivent impérativement être maintenus bien tendus. On peut utiliser, partout où cela est nécessaire, une propulsion pneumatique du genre de celle apparaissant sous la référence 56 dans le brevet US 3 894 906. On utiliserait une telle propulsion dans les tuyaux 30 ou 7, ainsi que dans le tube souple 83.

**Revendications**

1. Procédé de fabrication d'un pneumatique construit progressivement sur un support (1) monté rotatif autour d'un axe, en empilant les différents constituants du pneumatique dans l'ordre et à la place requise par l'architecture dudit pneumatique, procédé dans lequel au moins un renforcement de sommet est constitué à partir d'un fil (4) délivré à au moins un tuyau de pose (30 ou 7) en amont duquel on effectue une coupe du fil pour en prélever des tronçons, le fil passant au travers dudit tuyau pour rejoindre une tête de pose (32) qui est déplacée transversalement juste au dessus du support, les tronçons de fil et le support ayant des propriétés d'auto-adhésion.

2. Procédé selon la revendication 1, caractérisé en ce que ladite tête de pose (32) est déplacée transversalement selon une trajectoire sensiblement comprise dans un plan comprenant l'axe de rotation du support, en ce que l'angle de pose est obtenu par une rotation du support (1) coordonnée au mouvement transversal de la tête de pose (32).

3. Procédé selon la revendication 1 ou 2, caractérisé en ce que la longueur du tuyau de pose (30 ou 7) est ajustée en fonction de la longueur du tronçon à poser.

4. Procédé selon l'une des revendications 1 à 3, caractérisé en ce que l'avance initiale du fil (4) dans le tuyau de pose (30 ou 7) et le moment où intervient la coupe sont réglés pour que les bords de chaque tronçon se déposent à l'endroit souhaité sur le support (1).

5. Machine de fabrication d'un renfort de sommet pour pneumatique, comportant un distributeur de fil, des organes de pose du fil à l'endroit voulu sur un support (1), et des moyens d'entraînement du support (1) en rotation autour de son axe de symétrie de révolution, caractérisée en ce qu'elle comporte des moyens de coupe pour délivrer des tronçons de fil (4), disposés en amont des organes de pose, en ce que la sortie du distributeur de fil délivre le fil (4) aux organes de pose en un point fixe dans l'espace, situé radialement au dessus du support, et en en ce que les organes de pose comprennent essentiellement

- au moins un tuyau de pose (30 ou 7) disposé en aval du distributeur de fil, le fil délivré étant enfilé dans l'entrée (31 ou 71) du tuyau de pose pendant que celle-ci est sensiblement en regard de ladite sortie du distributeur de fil et à faible distance de celle-ci, le fil cheminant à l'intérieur du tuyau de pose jusqu'à une tête de pose (32) solidaire de celui-ci, et
- des moyens permettant de déplacer transversalement chaque tête de pose juste au dessus du support.

6. Machine selon la revendication 5, caractérisée en ce que le distributeur de fil comporte un ensemble de motorisation (80 + 81 + 82) du fil permettant d'imposer au fil (4) une avance à vitesse linéaire choisie, délivrant le fil à un dispositif de coupe (85 ou 850, 851) du fil pour en prélever des tronçons.

7. Machine selon la revendication 5 ou 6, caractérisée en ce que chaque tête de pose est déplacée juste au dessus du support selon une trajectoire sensiblement comprise dans un plan méridien, et en ce que l'angle de pose des tronçons de fil sur le support est réglé en coordonnant la vitesse des moyens pour déplacer chaque tête de pose et la vitesse d'entraînement en rotation du support.

8. Machine selon l'une des revendications 5 à 7, caractérisée en ce qu'elle comporte plusieurs tuyaux de pose (7), rejoignant tous une tête de pose (32) différente, et ayant chacun une entrée (71) par laquelle le fil est enfilé et en ce qu'elle comporte un dispositif permettant de présenter successivement chacune de ces entrées au dispositif de coupe (85 ou 851 ou 852) pour introduction du fil, le mouvement du dispositif de présentation étant synchronisé au mouvement du brin d'entraînement.

9. Machine selon l'une des revendications 5 à 8, caractérisée en ce que les moyens permettant de déplacer transversalement chaque tête de pose sont constitués essentiellement par un brin souple d'entraînement (5) monté sur un circuit de guidage dont une partie est disposée transversalement par rapport au support (1) sur toute la largeur de celui-ci, chaque tête de pose (32) étant accrochée au brin d'entraînement, et en ce que la machine comporte des moyens assurant le mouvement du brin d'entraînement.

10. Machine selon la revendication 8 ou 9, caractérisée en ce que le dispositif de présentation est un barillet (50).

11. Machine selon la revendication 8 ou 9, caractérisée en ce que le dispositif de présentation est un brin d'entraînement secondaire (5S) monté sur un circuit de guidage secondaire, sensiblement parallèle au circuit de guidage des têtes de pose, le mouvement des deux brins d'entraînement (5 et 5S) étant synchronisé.

12. Machine selon la revendication 5, caractérisée en ce qu'elle comporte un dispositif de rouletage embrassant toute la largeur du support.

13. Machine selon la revendication 12, caractérisée en ce que le dispositif de rouletage est installé parallèlement à la partie du circuit de guidage disposée transversalement par rapport au support (1), et au point de rencontre du fil (4) sur le support (1).

14. Machine selon l'une des revendications 5 à 13, caractérisée en ce que les moyens de déplacement de la tête de pose autorisent une vitesse variable pour une vitesse de rotation constante du support, de façon à poser le fil sur le support selon un angle variable.

**15.** Machine selon les revendications 7 et 14, caractérisée en ce que les moyens assurant le mouvement du brin d'entraînement sont constitués par un premier arbre (53A) entraîné à une vitesse directement proportionnelle à la vitesse de rotation du support (1), le premier arbre (53A) attaquant l'arbre d'entrée d'un différentiel (65), un second arbre (53B) entraîné par l'arbre de sortie du différentiel (65), le second arbre (53B) entraînant le brin souple (5), le troisième arbre du différentiel (65) étant solidaire d'un levier (66) sur lequel est fixé un galet (67) coopérant avec une came rotative (68) entraînée à une vitesse angulaire directement proportionnelle à celle du premier arbre (53A).

**16.** Machine selon les revendications 5, 7 et 9, caractérisée en ce que la tête de pose (32) est accrochée au brin d'entraînement par l'intermédaire d'un basculeur (93) comportant un axe de pivotement (90) et deux leviers solidaires l'un de l'autre, basculant autour de l'axe de pivotement (91), et en ce que l'axe de pivotement (91) est accroché sur le brin d'entraînement (5), en ce que la ou chaque tête de pose (32) est montée à l'extrémité d'un des leviers, et en ce que un galet (90) est monté à l'extrémité de l'autre levier, et est engagé sur une came (9) orientée parallèlement au circuit de guidage, came dont le profil permet, pour une vitesse constante du brin d'entraînement, de faire varier la vitesse transversale de la ou des têtes de pose par rapport à celle du brin.

**17.** Machine selon l'une des revendications 5 à 16, caractérisée en ce que le circuit de guidage est défini par deux poulies (51, 52) disposées de part et d'autre du support (1), sur lesquelles le brin d'entrainement (5) est monté, l'axe de rotation des poulies étant perpendiculaire à un rayon du support passant par le brin, et perpendiculaire à l'axe de rotation du support.

**18.** Machine selon l'une des revendications 5 à 17, caractérisée en ce que la longueur du tuyau de pose est ajustée en fonction de la longueur des tronçons de fil à poser.

**Claims**

**1.** A method of manufacturing a tyre built progressively on a support (1) which is rotatably mounted around an axis, by stacking the different components of the tyre in the order and at the place required by the architecture of said tyre, in which method at least one crown reinforcement is formed from a cord (4) fed to at least one laying tube (30 or 7) upstream of which the cord is cut so as to obtain lengths, the cord passing through said tube to reach a laying head (32) which is displaced transversely just above the support, the lengths of cord and the support having self-adhesion properties.

**2.** A method according to Claim 1, characterised in that said laying head (32) is displaced transversely along a path substantially contained within a plane containing the axis of rotation of the support, and in that the laying angle is obtained by a rotation of the support (1) coordinated with the transverse movement of the laying head (32).

**3.** A method according to Claim 1 or 2, characterised in that the length of the laying tube (30 or 7) is adjusted as a function of the length of the length to be laid.

**4.** A method according to one of Claims 1 to 3, characterised in that the initial advance of the cord (4) in the laying tube (30 or 7) and the moment when the cutting takes place are adjusted so that the edges of each length are laid at the desired place on the support (1).

**5.** A machine for the manufacture of a crown reinforcement for tyres, comprising a cord distributor, members for laying the cord at the desired place on a support (1) and means for driving the support (1) in rotation around its axis of symmetry of revolution, characterised in that it comprises cutting means for delivering lengths of cord (4), which means are arranged upstream of the laying members, in that the outlet of the cord distributor delivers the cord (4) to the laying members at a point fixed in space, located radially above the support, and in that the laying members essentially comprise

- at least one laying tube (30 or 7) arranged downstream of the cord distributor, the cord delivered being threaded into the inlet (31 or 71) of the laying tube while the latter is substantially opposite said outlet of the cord distributor and at a slight distance from it, the cord moving within the laying tube up to a laying head (32) rigidly fastened to it, and
- means permitting the transverse displacement of each laying head just above the support.

**6.** A machine according to Claim 5, characterised in that the cord distributor comprises a drive assembly (80 + 81 + 82) for the cord which makes it possible to impose upon the cord (4) an advance with selected linear speed, delivering the cord to a device (85 or 850, 851) for cutting the cord in order to obtain lengths thereof.

**7.** A machine according to Claim 5 or 6, characterised in that each laying head is displaced just above the support along a trajectory substantially contained within a meridian plane, and in that the laying angle of the lengths of cord on the support is regulated by coordinating the speed of the means for displacing each laying head and the speed of the driving in rotation of the support.

8. A machine according to one of Claims 5 to 7, characterised in that it comprises a plurality of laying tubes (7) all reaching a different laying head (32) and each having an inlet (71) through which the cord is threaded, and in that it comprises a device making it possible to present each of these inlets, in succession, to the cutting device (85 or 851 or 852) for introduction of the cord, the movement of the presentation device being synchronised with the movement of the drive strand.

9. A machine according to one of Claims 5 to 8, characterised in that the means making it possible to displace each laying head transversely are formed essentially of a flexible drive strand (5) mounted on a guide circuit, a part of which is arranged transversely with respect to the support (1) over the entire width thereof, each laying head (32) being carried by the drive strand, and in that the machine comprises means which ensure the movement of the drive strand.

10. A machine according to Claim 8 or 9, characterised in that the presentation device is a turret (50).

11. A machine according to Claim 8 or 9, characterised in that the presentation device is a secondary drive strand (5S) mounted on a secondary guide circuit, substantially parallel to the guide circuit of the laying heads, the movement of the two drive strands (5 and 5S) being synchronised.

12. A machine according to Claim 5, characterised in that it comprises a pressing device covering the entire width of the support.

13. A machine according to Claim 12, characterised in that the pressing device is installed parallel to the part of the guide circuit arranged transversely with respect to the support (1) and at the point of encounter of the cord (4) with the support (1).

14. A machine according to one of Claims 5 to 13, characterised in that the means for the displacement of the laying head permit a variable speed for a constant speed of rotation of the support, so as to lay the cord on the support at a variable angle.

15. A machine according to Claims 7 and 14, characterised in that the means ensuring the movement of the drive strand are formed by a first shaft (53A) driven at a speed directly proportional to the speed of rotation of the support (1), the first shaft (53A) acting on the input shaft of a differential (65), a second shaft (53B) driven by the output shaft of the differential (65), the second shaft (53B) driving the flexible strand (5), the third shaft of the differential (65) being integral with a lever (66) on which there is fastened a roller (67) cooperating with a rotary cam (68) driven at an angular speed which is directly proportional to that of the first shaft (53A).

16. A machine according to Claims 5, 7 and 9, characterised in that the laying head (32) is connected to the drive strand by means of a rocker (93) comprising a pivot pin (90) and two levers integral with each other, swinging around the pivot pin (91), and in that the pivot pin (91) is connected to the drive strand (5), in that the or each laying head (32) is mounted at the end of one of the levers, and in that a roller (90) is mounted at the end of the other lever and is engaged on a cam (9) which is oriented parallel to the guide circuit, the profile of which cam makes it possible, for a constant speed of the drive strand, to vary the transverse speed of the laying head or heads with respect to that of the strand.

17. A machine according to one of Claims 5 to 16, characterised in that the guide circuit is defined by two pulleys (51, 52) disposed on opposite sides of the support (1), on which pulleys the drive strand (5) is mounted, the axis of rotation of the pulleys being perpendicular to a radius of the support passing through the strand and perpendicular to the axis of rotation of the support.

18. A machine according to one of Claims 5 to 17, characterised in that the length of the laying tube is adjusted as a function of the length of the lengths of cord to be laid.

**Patentansprüche**

1. Verfahren zur Herstellung eines Reifens, der fortschreitend auf einem Träger (1) aufgebaut wird, der um eine Achse drehbar angebracht ist, indem man die verschiedenen Bestandteile des Reifens in der Reihenfolge und an der Stelle aufbringt, die durch den Aufbau des genannten Reifens gefordert sind, wobei in dem Verfahren mindestens eine Scheitelverstärkung aus einem Faden bzw. Draht (4) gebildet ist, der aus mindestens einem Verlegerohr (30 oder 7) abgegeben wird, vor diesem, man in Laufrichtung gesehen, den Draht abschneidet, um von ihm Abschnitte zu entnehmen, der Draht das genannte Rohr durchläuft, um zu einem Verlegekopf (32) zu gelangen, der in Querrichtung unmittelbar an der Oberseite des Trägers versetzt wird, und die Drahtabschnitte sowie der Träger selbsthaftende Eigenschaften aufweisen.

2. Verfahren nach Anspruch 1, dadurch **gekenn-**

**zeichnet**, daß der genannte Verlegekopf (32) in Querrichtung längs einer Bewegungsbahn versetzt wird, die im wesentlichen in einer Ebene liegt, welche die Drehachse des Trägers enthält, und daß der Verlegewinkel durch eine Drehung des Trägers (1) erhalten wird, die auf die Querbewegung des Verlegekopfes (32) abgestimmt ist.

3. Verfahren nach Anspruch 1 oder 2, dadurch **gekennzeichnet**, daß die Länge des Verlegerohres (30 oder 7) als Funktion der Länge des zu verlegenden Abschnitts eingestellt ist.

4. Verfahren nach einem der Ansprüche 1 bis 3, dadurch **gekennzeichnet**, daß der anfängliche Vorschub des Drahtes (4) im Verlegerohr (30 oder 7) und der Augenblick, in dem der Schnittvorgang eingreift, so einreguliert sind, daß die Ränder eines jeden Abschnitts an der gewünschten Stelle auf dem Träger (1) aufgelegt werden.

5. Maschine zur Herstellung einer Scheitelverstärkung für einen Reifen mit einem Faden- bzw. Drahtverteiler, Organen zum Verlegen des Drahtes an der gewünschten Stelle auf einem Träger (1) und Mitteln zum Drehantrieb des Trägers (1) um seine Rotationssymmetrieachse, dadurch **gekennzeichnet**, daß sie Abschneidemittel aufweist, um Abschnitte des Drahtes (4) abzugeben, die, in Laufrichtung gesehen, vor den Verlegeorganen angeordnet sind, daß der Ausgang des Drahtverteilers den Draht (4) an die Verlegeorgane an einen festen Punkt im Raum abgibt, der radial über dem Träger gelegen ist, und daß die Verlegeorgane im wesentlichen die folgenden Merkmale aufweisen:

- mindestens ein Verlegerohr (30 oder 7), das nach dem Drahtverteiler angeordnet ist, wobei der angelieferte Draht in den Einlauf (31 oder 71) des Verlegerohres eingefädelt wird, während dieser im wesentlichen dem genannten Auslauf des Drahtverteilers gegenüberliegt und zu diesem einen geringen Abstand aufweist, und der Draht im Inneren des Verlegerohres bis zu einem Verlegekopf (32) entlangläuft, welcher fest mit diesem verbunden ist, und
- Mittel, die es gestatten, jeden Verlegekopf unmittelbar über dem Träger in Querrichtung zu versetzen.

6. Maschine nach Anspruch 5, dadurch **gekennzeichnet**, daß der Drahtverteiler eine Antriebsgruppe (80 + 81 + 82) für den Draht aufweist, die es gestattet, auf den Draht (4) einen Vorschub mit ausgewählter, linearer Geschwindigkeit aufzubringen, die den Draht an eine Draht-Schneidevorrichtung (85 oder 850, 851) anliefert, um aus ihm Abschnitte zu entnehmen.

7. Maschine nach Anspruch 5 oder 6, dadurch **gekennzeichnet**, daß jeder Verlegekopf unmittelbar über dem Träger längs einer Bewegungsbahn versetzt wird, die im wesentlichen in einer Meridianebene enthalten ist und daß der Verlegewinkel der Drahtabschnitte auf dem Träger dadurch einreguliert ist, daß man die Geschwindigkeit der Mittel zum Versetzen eines jeden Verlegekopfes und die Drehantriebsgeschwindigkeit des Trägers aufeinander abstimmt.

8. Maschine nach einem der Ansprüche 5 bis 7, dadurch **gekennzeichnet**, daß sie mehrere Verlegerohre (7) aufweist, die alle einen unterschiedlichen Verlegekopf (32) erreichen und jeweils einen Einlauf (71) aufweisen, durch welchen der Draht eingefädelt wird, und daß sie eine Vorrichtung aufweist, die es gestattet, aufeinanderfolgend jeden dieser Einläufe der Schneidevorrichtung (85 oder 851 oder 852) zum Einführen des Drahtes darzubieten, wobei die Bewegung der Darbietevorrichtung mit der Bewegung des Antriebsstranges synchronisiert ist.

9. Maschine nach einem der Ansprüche 5 bis 8, dadurch **gekennzeichnet**, daß die Mittel, die das Versetzen eines jeden Verlegekopfes in Querrichtung gestatten, im wesentlichen von einem weichen Antriebsstrang (5) gebildet sind, der auf einem Führungsumlauf montiert ist, von dem ein Teil in bezug auf den Träger (1) über dessen gesamter Breite in Querrichtung angeordnet ist, wobei jeder Verlegekopf (32) an den Antriebsstrang angekoppelt ist, und daß die Maschine Mittel aufweist, die die Bewegung des Antriebsstranges sicherstellen.

10. Maschine nach Anspruch 8 oder 9, dadurch **gekennzeichnet**, daß die Darbietevorrichtung eine Revolvereinrichtung (50) ist.

11. Maschine nach Anspruch 8 oder 9, dadurch **gekennzeichnet**, daß die Darbietevorrichtung ein Nebenantriebsstrang (5S) ist, der auf einem Neben-Führungsumlauf angebracht ist, der im wesentlichen parallel zum Führungsumlauf der Verlegeköpfe angeordnet ist, wobei die Bewegung der beiden Antriebsstränge (5 und 5S) synchronisiert ist.

12. Maschine nach Anspruch 5, dadurch **gekennzeichnet**, daß sie eine Aufwlaz- bzw. Aufrollvorrichtung aufweist, die die gesamte Breite des Trägers übergreift.

13. Maschine nach Anspruch 12, dadurch **gekennzeichnet**, daß die Aufrollvorrichtung parallel zu dem Teil des Führungsumlaufs angebracht ist, der in bezug auf den Träger (1) in Querrichtung angeordnet ist, und am Auftreffpunkt des Drahtes (4) auf den Träger (1).

14. Maschine nach einem der Ansprüche 5 bis 13, dadurch **gekennzeichnet**, daß die Mittel zum Versetzen des Verlegekopfes bei einer konstanten Drehgeschwindigkeit des Trägers eine variable Geschwindigkeit derartig gestatten, daß der Draht auf den Träger gemäß eines variablen Winkels aufgelegt wird.

15. Maschine nach den Ansprüchen 7 und 14, dadurch **gekennzeichnet**, daß die Mittel, die die Bewegung des Antriebsstranges sicherstellen, von einer ersten Welle (53A) gebildet sind, die mit einer Geschwindigkeit angetrieben ist, die unmittelbar proportional ist zur Drehgeschwindigkeit des Trägers (1), wobei die erste Welle (53A) die Eingangswelle eines Differentials (65) antreibt, und von einer zweiten Welle (53B), die durch die Ausgangswelle des Differentials (65) angetrieben wird, wobei die zweite Welle (53B) den weichen Antriebsstrang (5) antreibt und die dritte Welle des Differentials (65) fest mit einem Hebel (66) verbunden ist, auf dem eine Rolle (67) befestigt ist, die mit einem drehbaren Nocken bzw. einem drehbaren Steuerkurventeil (68) zusammenwirkt, der bzw. das mit einer Winkelgeschwindigkeit angetrieben ist, die unmittelbar proportional ist zu der der ersten Welle (53A).

16. Maschine nach den Ansprüchen 5, 7 und 9, dadurch **gekennzeichnet**, daß der Verlegekopf (32) an den Antriebsstrang mittels einer Kippeinrichtung (93) angekoppelt ist, die eine Schwenkachse (90) und zwei fest miteinander verbundene Hebel aufweist, die um die Schwenkachse (91) kippen, daß die Schwenkachse (91) am Antriebsstrang (5) angekoppelt ist, daß der oder jeder Verlegekopf (32) am Ende eines der Hebel angebracht ist, und daß eine Rolle (90) am Ende des anderen Hebels angebracht ist und in einen Nokken bzw. eine Steuerkurve (9) eingreift, der bzw. die parallel zum Führungsumlauf angeordnet ist, wobei das Profil des Nockens bzw. der Steuerkurve es bei einer konstanten Geschwindigkeit des Antriebsstranges gestattet, die Quergeschwindigkeit des Verlegekopfes oder der Verlegeköpfe in bezug auf die des Stranges verändern zu lassen.

17. Maschine nach einem der Ansprüche 5 bis 16, dadurch **gekennzeichnet**, daß der Führungsumlauf durch zwei Zahn- bzw. Riemenscheiben (51, 52) festgelegt ist, die beiderseits des Trägers (1) angeordnet sind und auf denen der Antriebsstrang (5) angebracht ist, wobei die Drehachse der Zahn- bzw. Riemenscheiben senkrecht zu einem Radius des Trägers verläuft, der durch den Strang hindurchläuft, sowie senkrecht zur Drehachse des Trägers.

18. Maschine nach einem der Ansprüche 5 bis 17, dadurch **gekennzeichnet**, daß die Länge des Verlegerohres als Funktion der Länge der Drahtabschnitte eingestellt ist.

Fig. 1

Fig. 2

Fig 3

Fig. 4

17

Fig. 5

Fig. 6

Fig 7

Fig. 8

Fig 9

Fig 10

Fig 11